(19)

Europäisches
Patentamt
European
Patent Office
Office européen
des brevets

(11) **EP 2 366 502 B1**

(12) **EUROPEAN PATENT SPECIFICATION**

(45) Date of publication and mention
of the grant of the patent:
**02.11.2011 Bulletin 2011/44**

(51) Int Cl.:
***B25J 9/16*** (2006.01)

(21) Application number: **10154799.0**

(22) Date of filing: **26.02.2010**

(54) **Robot with hand-object movement correlations for online temporal segmentation of movement tasks**

Roboter mit Hand-Objekt-Bewegungskorrelationen für temporäre Online-Segmentierung von Bewegungsaufgaben

Robot doté de corrélations de mouvement main-objet pour la segmentation temporelle en ligne de tâches de mouvement

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**21.09.2011 Bulletin 2011/38**

(73) Proprietor: **Honda Research Institute Europe GmbH**
**63073 Offenbach/Main (DE)**

(72) Inventors:
• **Gienger, Dr. Michael**
**63165, Mühlheim am Main (DE)**
• **Mühlig, Manuel**
**63165, Mühlheim am Main (DE)**

(74) Representative: **Rupp, Christian**
**Mitscherlich & Partner**
**Patent- und Rechtsanwälte**
**Sonnenstrasse 33**
**80331 München (DE)**

(56) References cited:
• **SING BING KANG ET AL: "A ROBOT SYSTEM THAT OBSERVES AND REPLICATES GRASPING TASKS" PROCEEDINGS OF THE FIFTH INTERNATIONAL CONFERENCE ON COMPUTER VISION. CAMBRIDGE, MA., JUNE 20 - 23, 1995; [PROCEEDINGS OF THE INTERNATIONAL CONFERENCE ON COMPUTER VISION], LOS ALAMITOS, IEEE COMP. SOC. PRESS, US, vol. CONF. 5, 20 June 1995 (1995-06-20), pages 1093-1099, XP000557485 ISBN: 978-0-7803-2925-6**
• **KULIC D ET AL: "Online Segmentation and Clustering From Continuous Observation of Whole Body Motions" IEEE TRANSACTIONS ON ROBOTICS, IEEE SERVICE CENTER, PISCATAWAY, NJ, US LNKD- DOI:10.1109/TRO.2009.2026508, vol. 25, no. 5, 1 October 2009 (2009-10-01), pages 1158-1166, XP011270995 ISSN: 1552-3098**
• **YASUO KUNIYOSHI ET AL: "LEARNING BY WATCHING: EXTRACTING REUSABLE TASK KNOWLEDGE FROM VISUAL OBSERVATION OF HUMAN PERFORMANCE" IEEE TRANSACTIONS ON ROBOTICS AND AUTOMATION, IEEE INC, NEW YORK, US LNKD- DOI:10.1109/70.338535, vol. 10, no. 6, 1 December 1994 (1994-12-01), pages 799-821, XP000482438 ISSN: 1042-296X**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### *Background of the invention:*

The invention generally relates to the field of robotics, and especially relates to the programming of a robot by demonstration and imitation learning, which allows said robot to learn from a human or non-human (e.g. another robot) teacher's demonstrations of movements. This learning is often based on movement trajectories of the human teacher's extremities (e.g. hands) or objects that the teacher manipulates. In order to allow the robot to efficiently learn from sensorial data of such demonstrations, the sensorial data need to be temporally segmented into distinct, meaningful parts (time segments) which capture important elements of the demonstrated task.

Based on these segmented parts of the sensorial data the robot (i.e. its computing unit) can extract goals and properties that allow the robot to reproduce the movement or learn the task.

### *Prior art:*

[1] Pardowitz, Michael, Haschke Robert, Steil Jochen J., and Ritter Helge J., "Gestalt-Based Action Segmentation for Robot Task Learning", IEEE-RAS 7th International Conference on Humanoid Robots (HUMANOIDS), 2008

- ○ Outer product of hand/object velocities as one feature
- ○ Complete trajectory as input for a neural network with one layer per feature
- ○ Result is a segmentation of a trajectory into Gestalt-based categories
- ○ Learning and application not online
- ○ Mentions use in robotics, experiment only with stationary camera
- ○ Differences:

  ■ In contrast to this invention, the segmentation is based on a complete trajectory that includes several parts of the movement as input. Therefore, the method cannot be used online during interaction, but is used to analyze a movement after it was performed.

[2] Calinon, Sylvain, "Continuous Extraction of Task Constraints in a Robot Programming by Demonstration Framework", PhD thesis, 2007

- ○ gazing and pointing criteria for modulating the prior of normal distributions, not for segmentation of movements
- ○ Differences:

  ■ Gazing and pointing criteria were mentioned wrt. imitation learning with a humanoid robot. However, the criteria were used for the modulation of a spatial prior rather than for temporal segmentation.

[3] Yasuo Kuniyoshi, Masayuki Inaba, Hirochika Inoue, "Learning by Watching: Extracting Reusable Task Knowledge from Visual Observation of Human Performance", IEEE Transactions on Robotics and Automation, 1994

- ○ structuring of an assembly process
- ○ pick and place operations detected by object disappearing/reappearing
- ○ join and split events based on distance between fingers and objects
- ○ Differences:

  ■ Although the work investigates the segmentation and structuring of a movement demonstration too, the criteria for segmentation are different to this work. They are coarser and more rule-based. For instance if an object disappears from the scene, it is assumed that it was picked up by a hand and if the distance of a hand to an object is below a certain threshold, both may be joined together.

[4] Lars Schillingmann, Britta Wrede and Katharina Rohlfing, "Towards a Computational Model of Acoustic Packaging", IEEE 8th International Conference on Development and Learning, 2009

- ○ Acoustic packages are temporal segments based on the correlation of speech and motion
- ○ Over segmentation and not explicitly task-related
- ○ Differences:

  ■ Temporal segmentation is based on social criteria, but the segments are not necessarily task-relevant i.e. usually they do not correspond to learnable entities with a defined start and end. Statistical learning would be very difficult based on such segments.

[5] Sing Bing Kang, Ikeuchi, K., "Determination of motion breakpoints in a task sequence from human hand motion", IEEE International Conference on Robotics and Automation, 1994

- ○ segmentation of manipulation phases in approach, pre-grasp, grasp ...
- ○ based only on hand information (velocity and joint angles)
- ○ Differences:

  ■ Foci of segmentation are manipulation phases like approaching an object, pre-grasp phase, and grasping instead of task-related object movements. In contrast to this invention, the segmentation is performed based on hand motion profiles only.

[6] Itoh, M., Ozeki, M., Nakamura, Y., Ohta, Y., "Simple and robust tracking of hands and objects for video-based multimedia production", IEEE International Conference on Multisensor Fusion and Integration for Intelligent Systems, MFI, 2003

○ detection of objects held in hands
○ feature fusion: skin color, skin temperature (IR), spatial prior and motion from difference image
○ finding maximum of features in image - > subtraction of skin color regions -> object region detected
○ Differences:

■ Hand object relations are only used for the spatial segmentation of an image and to find the object that is held in the hand. No temporal segmentation is performed and the work is not related to imitation learning with robots.

[7] Winfried Ilg, Gökhan H. Bakir, Johannes Mezger, Martin A. Giese, "On the Representation, Learning and Transfer of Spatio-Temporal Movement Characteristics", International Journal of Humanoid Robotics Vol. 1, No. 4 (2004) 613-636,

○ Common method of using velocity zero-crossings as segmentation border
○ Differences:

■ The approach based on velocity zero crossings is feasible for a small class of movements, such as gestures. It is not possible to apply the concept to more general movements, such as goal-directed ones. This invention exceeds the state of the art by using criteria that capture segmentation boundaries for more generic movements, particularly goal-directed movements involving objects.

[8] Nagai, Yukie, "From Bottom-Up Visual Attention to Robot Action Learning", IEEE 8th International Conference on Development and Learning (ICDL), 2009

○ Bottom-Up attention system operating on 2D video stream
○ Object recognition based on spatial and temporal continuity of color histograms, selected by a saliency mechanism
○ Such histograms and their movement are represented within so-called object chunks
○ Linear movements of salient points calculated from optical flow are segmented into motion chunks
○ Association of object and motion chunks if their direction corresponds
○ Differences:

■ In contrast to the present invention, the segmentation according to this document is not related to recognized object entities, but to the movement of salient scene elements. This results in a segmentation of every movement in the scene if it can be connected to a salient point. For each linear (in 2D) part of a movement a segment is created (possible over segmentation).

[9] M. Mühlig, M. Gienger, S. Hellbach, J. Steil, Ch. Goerick: Task level imitation using variance-based movement optimization. Int. Conf. on Robotics and Automation (ICRA), Kobe, Japan, 2009.

[10] T. B. Moeslund, A. Hilton, V. Krüger: A survey of advances in vision-based human motion capture and analysis, Computer Vision and Image Understanding 104, pp. 90-126, 2006.

***Target of the invention:***

The invention deals with the segmentation of object movements in a sensed visual data stream into meaningful time segments.

This object is achieved by means of the features of the independent claims. The dependent claims develop further the central idea of the present invention.

A first aspect relates to a method for segmenting a visually sensed data stream in time segments, the method comprising the steps of:

- visually sensing a human or non-human teacher manipulating an object,
- computing a correspondence value representing the correspondence between positions and/or movements or derivatives thereof of at least two of the following elements:

i.) the teacher's manipulating means,
ii.) the teacher's head and
iii.) the object, and

- starting a time segment of the input stream when the correspondence value exceeds a preset start threshold value and ending the time segment when the correspondence value falls below a preset stop threshold value.

The correspondence value may represent the correspondence of one or more of the following visually sensed features:

- The relation of the positions of the teacher's manipulating means and an object,
- The relation of the orientations of the teacher's manipulating means and an object,
- The common angular or linear velocity difference between the teacher's manipulating means and an object,
- The common angular or linear acceleration difference between the teacher's manipulating means and an object,
- The relation of the teacher's gaze direction and the object position,
- The relation of the position of the teacher's manipulating means and the teacher's gaze direction,
- The relation of the teacher's head orientation and the object orientation,
- The relation of the movement of the teacher's manipulating means and the object position/orientation.

The positions and/or movements of at least two elements may be combined in a weighted manner in order to compute the correspondence value, wherein the weight attribution can be adaptively modified during an ongoing segmentation of an input stream.

The start threshold value may be different to the stop threshold value, especially the start threshold value may be set higher than the stop threshold value.

A further aspect of the invention relates to a imitation learning method, comprising the steps of:

- segmenting a visually sensed data stream with a method having the steps of any of the preceding claims, and
- imitating the movement of the teacher's manipulating means of a time segment.

Yet another aspect of the invention relates to a robot, being provided with visual sensing means and a computing unit, the computing unit being designed to execute a method according to any of the preceding claims.

A still further aspect of the present invention relates to a video signal processing system, having a computing unit designed or programmed to perform such a temporal segmentation method on a supplied video signal, such that the video signal processing system may generate and even output a time segmentation signal indicating the start and the end of a "meaningful" time segment in the supplied video signal.

Further features, advantages and objects of the present invention will become evident to the skilled person when going through the following detailed explanation of an nonlimiting embodiment of the invention, when taken in conjunction with the figures of the enclosed drawings.

**Figure 1** shows a flow chart of a segmentation process with multiple criteria, and

**Figure 2** shows an example of the hand-object correlation in a typical teaching scenario

The object of the invention thus is to improve the segmentation process especially with regard to imitation learning with robots. The interaction becomes more fluent and natural and the segments that result from the segmentation can be used directly for learning from them. This is achieved by incorporating one or a combination of the following features into the segmentation:

• Recognition, based on sensorial data, of a human teacher and evaluating which of the objects in the sensed scene is being actively manipulated by the teacher and which objects move within the sensed scene due to an effect of the demonstrated action of the teacher.
• Evaluation, by a computing unit of the robot, of correlative features in the sensorial input field between the object's and hand's position and orientation or any of their derivatives.
• visually sensed postural information of the human teacher (e.g. teacher is gazing at the robot's head).

The segmentation criteria are preferably applied on the basis of sensed stereo vision data and the segmentation may be performed online and in real time, e.g. by an on-board computing unit of the robot. It is therefore especially well suited to be used with the onboard vision system (e.g. stereo video camera) of a humanoid robot. The onboard visions system may be mounted to the head part of the humanoid robot, while the computing unit may housed in or attached to a body part of the humanoid robot. The humanoid robot usually will have manipulators ("arms" and "hands") which allow the robot to imitate perform, esp. imitate tasks learned by a human or non-human teacher. E.g. another humanoid robot may serve as a non-human teacher, such that the learning of tasks may even be performed without human interference.

As mentioned above, the invention relates (not exclusively) to the field of imitation learning with robots and proposes a method to approach the problem of temporal movement segmentation. The invention does not relate to spatial segmentation where e.g. an image is segmented into regions, but rather to a temporal segmentation. However such spatial segmentation can well be present in addition to the temporal segmentation according to the invention.

Known methods are usually based on information such as position or velocity of a tracked object only. The disadvantage with these approaches is that the extracted segments are mostly not suitable for teaching a robot a task within an imitation learning scenario. Common reasons for this are on the one side over-segmentation of a demonstrated task, where it is not clear which segments actually belong to the task and which not. On the other side the fluent interaction with the robot suffers because of necessary pauses at the beginning and the end of a movement (in case of using velocity zero-crossings [7] or manual segmentation).

**Detailed description of the invention:**

The invention relates to the temporal segmentation of e.g. visually sensed object-related movements. "Object-related movements" are movements of a manipulator, e.g. the hand of a human teacher, together with an object.

The general process of segmentation acts on an input stream of said stereo video data, gathered e.g. via stereo video cameras of a robot. Based on these input data and applying specific criteria, a computing unit of the robot temporally segments the stream into distinct parts that can be further processed e.g. in an imitation system. The invention proposes specific criteria for the segmentation process.

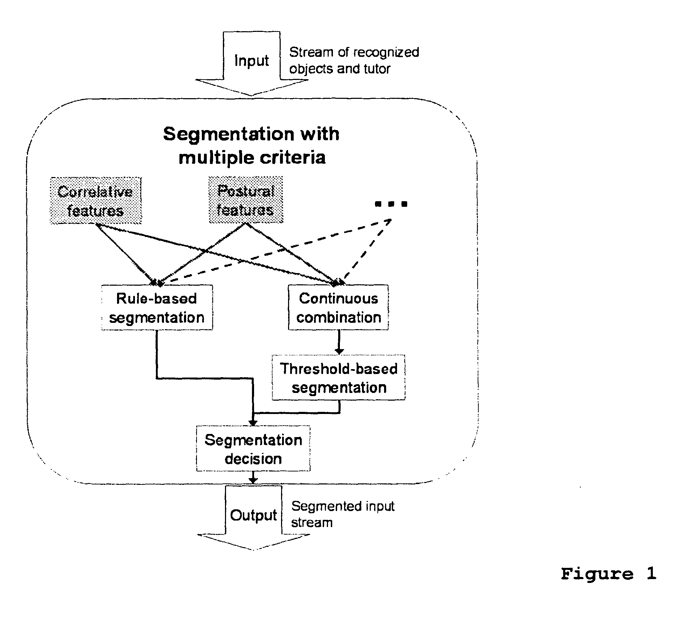

Figure 1 shows the general process of segmentation with multiple criteria. The main focus of the explanation below lies on the criteria used within the segmentation (gray boxes). It is to be understood that the process of figure 1 may be executed by an on-board computing unit of a robot, wherein sensorial data representing the scene, i.e. the environment of the robot which can be sensed, are provided e.g. by a stereo video camera system mounted e.g. on a head of a humanoid robot.

**Input**

*Object movement*

Visual sensorial data is supplied to the computing unit of the robot, such that the computing unit may capture the position and orientation of objects (in the input field of the robot's sensor) precisely and with a high temporal resolution. In the robotics domain, stereo vision systems or other 3d cameras (e.g. time-of-flight cameras) are often used. They are advantageous due to their small size. This makes them easy to be integrated on a robot. Also monocular camera systems can deliver such information, for instance marker-based systems (ARToolkit: http://www.hitl.washington.edu/artoolkit).

Other possibilities are motion capture devices, such as optical systems (VICON: http://www.vicon.com) or magnetic tracking devices (Polhemus: http://www.polhemus.com). These devices are commonly installed in a room and are difficult to be integrated on a robot.

*Finger movements*

Sensors like **data-gloves** (ESP) can be used to capture the movement of the fingers of a teacher with good precision and time resolution. Finger movement can also be captured by camera-based systems.

*Body and eye movement*

To allow the robot to track the gaze of the human teacher, the robot may be provided with an eye-tracking device. Such eye-tracking device are known from the prior art as such. Tracking the movement of particular body parts may be realized with motion-capture devices. There are also model-based approaches using stereo vision or 3d-sensors. Another alternative are **motion-capture suits** in which a human can be dressed. Those suits are equipped with sensors that directly measure the movement of particular body portions (http://www.organicmotion.com).

*Implementation example of the invention*

In an implementation example for a system according to the invention, a 3d stereo vision camera system may be used. However, the method is not limited to this kind of sensing. The processing is carried out by the robot's computing unit as follows:

> From the image stream (i.e. the visual sensorial input data), a depth stream (based on a stereo-correspondence algorithm) and several color mask streams are computed with a frequency of e.g. about 8-12Hz. The depth stream links 2d vision data with depth information. The color mask streams represent color-segmented sub-streams of the image stream.

The object transformations, i.e. the movements of one or more objects in the input field of the robot's sensor, are estimated by first detecting the region of the object in the image stream based e.g. on an object's color. (Such visual region segmentation is known from the prior art). The result is a color mask, which is then used to determine the corresponding portion of the depth image. The depth information in the object region is evaluated to obtain an accurate 3d position and orientation estimate of the object. The change of the estimate of an object over time represents its estimated transformation.

This object estimate may be processed by a set of filters to eliminate outliers and noise.

A similar approach is taken to obtain the estimate of the position and orientation of a human teacher or parts thereof. The color mask is computed for the skin color. In the embodiment, only one person is present in the field of view (sensorial input field). When e.g. 3 skin color regions are detected, they are interpreted by the robot's computing unit as left hand, right hand, and head, according to their position. The depth information is evaluated over the skin color regions. The position of hands and head only may be determined by the stereo vision system and the connected computing unit. The orientation of these parts of the human teacher is more complex for the hands, since the shape changes significantly when moving the fingers. To stabilize the estimation and to get a consistent hand orientation, an inverse-kinematics filter may be used. It employs a kinematic model of a human teacher and estimates its pose based on the position of hands and head. This eliminates measurement failures that lead to unrealistic poses.

The input into the segmentation process thus is a continuous stream of object transformations, the positions of hands and head of the human interaction partner, as well as the humans pose estimate.

**Correlation features**

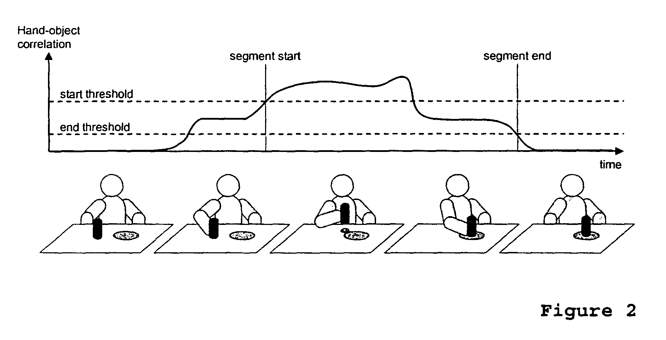

The continuous input stream is then evaluated for a set of correlative features. The invention especially deals with the correlation of the hand-object movements. This is illustrated in Figure 2. The correlation step comprises two elements:

- The proximity between hand and object
- The relative velocity between hand and object

*1. Proximity between hand and object*
If hand and object are close to each other, their proximity is added to the feature as

$$f_1 = \frac{1}{2} sigmoid\left(c_1 \cdot (d - c_2)\right)$$

. Scalar d is the distance between hand and object, $c_1$ and $c_2$ are constants, and the sigmoid function is defined as

$$f(x) = \frac{1}{1 + e^{-x}}$$

.

*2. Common velocity direction of hand and object*
If hand and object have a common velocity vector, it is considered in the feature as

$$f_2 = \frac{1}{2} \alpha \cdot sigmoid\left(c_3 \cdot (\delta v - c_4)\right)$$

. Scalar $\delta v$ is the relative velocity of the objects and c3 and c4 are constants. Scalar $\alpha$ is computed as $\alpha = sigmoid(c_5 \cdot (v_1 - c_6)) \cdot sigmoid(c_7 \cdot (v_2 - c_8))$. It scales $f_2$ if one of the objects velocities is low. If it falls below a certain threshold ($v_1$ below $c_6$ or $v_2$ below $c_8$), $f_2$ is getting very small.

The overall correspondence of hand and object movement is computed as the sum of f$_1$ and f$_2$. To summarize, this means that the correspondence value increases if a) the distance between a hand and an object get close and b) they move in the same direction.

This correspondence value is evaluated continuously. An example is depicted in Figure 2. The human reaches for the object and grasps it. This corresponds to images 1 and 2. The correspondence value increases since the hand-object distance gets low. Between image 2 and 3, the human moves the object to a different location. Since object and hand have a low distance, and are moved in the same direction, the correspondence value increases until the object is placed on its target position. At this time point, the correspondence value decreases, since the velocity of the object (and of the hand) get small (value a) . Only the term f$_1$ is contributing at this moment. When the person withdraws the hand from the object, the correspondence value drops to zero (last image).

The movement segmentation is determined by 2 thresholds. Exceeding a start threshold indicates when the movement starts. The movement ends when the correspondence value drops under the end threshold.

Such correlative features can also be extracted from object-object relation. This can also be used for segmentation e.g. if an object is placed on top of another one or at a specific place. If the object relation does not change for a specific period of time this could be recognized as the end of a segment.

**Postural features**

Another aspect of the invention relates to the exploitation of the knowledge that in learning scenarios usually a human teacher explains the movement task. It is widely known that humans are very sensitive towards social cues during interaction and it is favorable to transfer this to robots. These cues carry a lot of information that can also be used for the movement segmentation.

Prerequisite to use this criterion is the recognition of the human teacher. A whole scientific field (see [10] for a review) is concerned with people tracking and posture analysis and most of the methods can be used as an input to this criterion. Especially favorable with regard to the field of robotics is the use of people detection methods that rely on vision input only. Because of the large variety of systems that fulfill this prerequisite easily (see section "Input"), it can be assumed that the teacher's posture i.e. hand and head positions as well as the gazing direction can be detected.

The first way to incorporate information about the teacher into the segmentation process is to exploit the gazing direction during the demonstration. Because object positions, the teacher's head position, the robot's head position as well as the gazing direction of the teacher is known, it is possible to recognize if the teacher observes it's own manipulative movement (e.g. teacher gazes at its hand or the manipulated object), gazes at the robot, or looks somewhere else and thus may not be engaged in the current situation. A useful way to use this knowledge for segmentation is to assume that if the teacher observes its own movement, it is probably an important part of a demonstration that belongs to one segment. If after the demonstration, the teacher looks at the robot in order to await a confirmation or similar, this can be assumed as the end of a segment.

The second way to use information about the teacher's posture for segmentation is the recognition of gestures. The teacher can signalize the beginning or the end of a movement either intentionally (if specific gestures are pre-defined) or unintentionally (if common human behavior during teaching is exploited).

A third way for exploiting postural information is the evaluation of grasping information. An object-related movement usually has the necessity for the teacher of grasping the object first and later releasing the object after the demonstration was performed. Therefore, grasping on the one hand and releasing on the other directly correspond to segment borders.

## Rule-based segmentation

Each criterion used for segmentation usually calculates a continuous value that represents if the individual criterion has detected a segmentation border. One way to combine these values into a segmentation decision is use a set of rules that convert these continuous values into a binary decision on the beginning or the end of a (temporal) movement segment.

## Continuous combination

Instead of directly applying rules to the continuous criterion values it is also possible to combine them into one continuous value. This is usually done by weighting the importance of the different cues and possibly account for their reliability and variance. Often, these weighting parameters are adapted by a control loop in order to adapt the segmentation system to changing situations.

## Threshold-based segmentation

If the criteria are combined in a continuous way, still at some point there needs to be a concrete decision on if a segmentation border is detected or not. This is usually done by applying a threshold on the previously calculated continuous value to convert it into a binary decision. It is often useful to use a hysteresis (specifically two thresholds) in order to avoid over-segmentation and to achieve robustness to noise.

## Segmentation decision

Usually, segmentation systems solely rely on the previously explained rule-based segmentation or continuous combination with application of a threshold. However, it would also be possible to combine both paths into a final segmentation decision. This can be achieved in various ways that are known to the skilled person and therefore not explained further.

## Output

Result of the segmentation process is the partitioning of the input stream into segments that can be further processed e.g. in a robotic imitation learning system. The output may not only be the segments themselves, but also a categorization into segments useful for the further processing or irrelevant. For example, segments that are too short, may not be useful to learn a task from them.

### *Important aspects of the invention:*

The invention is a system that automatically finds a meaningful segmentation for a temporal sequence of object-related movements carried out by a teacher. The method is independent of the sensors employed to capture the data. The novel concept is to relate the movement of the human with the movement of the object and compute a correspondence value from it, and extract information about which object in the scene are being actively manipulated. Segmentation of the continuous data stream into meaningful segments is done by applying start and stop thresholds of the correspondence value. The correlation can be based on the relation of a teacher's movement with respect to an object movement:

- The relation of a hand's and an object's position
- The relation of a hand's and object's orientation
- The common angular or linear velocity difference between hand and object
- The common angular or linear acceleration difference between hand and object
- The relation of the human's gaze direction and the object position
- The relation of the human's hand positions and gaze direction
- The relation of the human's head orientation and the object orientation
- The relation of the finger movement and the object position / orientation

Further the segmentation can be based on predefined, learned, intentional or unintentional gestures by the human.

### *Application Areas*

The invention is useful in any area that needs temporal segmentation of movement data. This is especially true for imitation learning scenarios where a technical system observes a human teacher and learns from him. The invention is useful in the scenario of teaching a humanoid robot object-related movements. The teaching of industrial robots is also an important and promising field for applying the invention.

An additional area of application are video production systems where e.g. a video is automatically split into distinct parts with the segmentation process of this invention. This could be useful for teaching movies where the segmented parts are assigned to processing steps (e.g. enumeration), which are explained independently.

The field of robotics and computer games share many common aspects and therefore the invention may also be applied there.

### *Glossary:*

Include a list of terminology used, which is either new or which carries a certain meaning potentially different from standard language semantics.

• **Segmentation:** The term segmentation as used here relates to a temporal partitioning of a stream of data based on multiple criteria. The invention does not relate to spatial segmentation where e.g. an image is segmented into regions.

• **Over-segmentation:** Over-segmentation describes a problem of many segmentation algorithms. It means that a stream of input data is segmented into too many small segments where each individual segment carries not enough information anymore for an efficient further processing.

• **Imitation learning:** Imitation learning is a method in the field of robotics that allows teaching a robot new movements or tasks by showing it to the robot rather than explicitly programming it into the system.

**Claims**

1. A method for segmenting a sensed data stream in time segments, the method comprising the steps of:

   - visually sensing a human or non-human teacher manipulating an object,
   - computing a correspondence value representing the correspondence between positions and/or movements or derivatives thereof of at least two of the following elements:

      i.) the teacher's manipulating means,
      ii.) the teacher's head and
      iii.) the object, and

   - starting a time segment of the input stream when the correspondence value exceeds a preset start threshold value and ending the time segment when the correspondence value falls below a preset stop threshold value.

2. The method according to claims 1, wherein the correspondence value represents the correspondence of one or more of the following visually sensed features:

   - The relation of the positions of the teacher's manipulating means and an object,
   - The relation of the orientations of the teacher's manipulating means and an object,
   - The common angular or linear velocity difference between the teacher's manipulating means and an object,
   - The common angular or linear acceleration difference between the teacher's manipulating means and an object,
   - The relation of the teacher's gaze direction and the object position,
   - The relation of the position of the teacher's manipulating means and the teacher's gaze direction,
   - The relation of the teacher's head orientation and the object orientation,
   - The relation of the movement of the teacher's manipulating means and the object position/orientation.

3. The method according to claim 1 or 2, wherein the positions and/or movements or derivatives thereof of at least two elements are combined in a weighted manner in order to compute the correspondence value, wherein the weight of each element can be adaptively modified during an ongoing segmentation of an input stream.

4. The method according to any of the preceding claims, wherein the start threshold value is different to the stop threshold value, especially the start threshold value is higher than the stop threshold value.

5. An imitation learning method, comprising the steps of:

   - segmenting a visually sensed data stream with a method having the steps of any of the preceding claims, and
   - imitating the movement of the teacher's manipulating means of a time segment.

6. A robot, being provided with visual sensing means and a computing unit, the computing unit being designed to execute a method according to any of the preceding claims.

7. A video signal processing system, having a computing unit designed or programmed to perform a method according to any of claims 1 to 4.

**Patentansprüche**

1. Verfahren zum Segmentieren eines abgetasteten Datenstroms in Zeitsegmente, wobei das Verfahren die folgenden Schritte aufweist:

   - visuelles Abtasten eines menschlichen oder nicht menschlichen Lehrers, der ein Objekt handhabt,
   - Berechnen eines Übereinstimmungswerts, der die Übereinstimmung zwischen Positionen und/ oder Bewegungen oder deren Ableitungen von wenigstens zwei der folgenden Elemente darstellt:

   i) der Handhabungsmittel des Lehrers,
   ii.) des Kopfs des Lehrers, und
   iii) des Objekts, und

   - Starten eines Zeitsegments des Eingangsstroms, wenn der Übereinstimmungswert einen vorbestimmten Startschwellwert übersteigt, und Beenden des Zeitsegments, wenn der Übereinstimmungswert unter einen vorbestimmten Stoppschwellwert fällt.

**2.** Verfahren nach Anspruch 1,
wobei der Übereinstimmungswert die Übereinstimmung eines oder mehrerer der folgenden visuell abgetasteten Merkmale darstellt:

   - die Beziehung der Positionen des Handhabungsmittels des Lehrers und eines Objekts,
   - die Beziehung der Ausrichtungen des Handhabungsmittels und eines Objekts,
   - die gesamte Winkel- oder Lineargeschwindig-keitsdifferenz zwischen dem Handhabungsmit-tel des Lehrers und einem Objekt,
   - die gesamte Winkel- oder Linearbeschleuni-gungsdifferenz zwischen dem Handhabungs-mittel des Lehrers und einem Objekt,
   - die Beziehung zwischen der Blickrichtung des Lehrers und der Objektposition,
   - die Beziehung der Position des Handhabungsmittels des Lehrers und der Blickrichtung des Lehrers,
   - die Beziehung der Ausrichtung des Kopfs des Lehrers und der Obj ektausrichtung,
   - die Beziehung der Bewegung des Handhabungsmittels des Lehrers und der Objektposition/Ausrichtung.

**3.** Verfahren nach Anspruch 1 oder 2,
wobei die Positionen und/oder Bewegungen oder deren Ableitungen von wenigstens zwei Elementen in einer gewichteten Weise kombiniert werden, um den Übereinstimmungswert zu berechnen, wobei das Gewicht jedes Elements während jeder laufenden Segmentierung eines Eingangsstroms adaptiv modifiziert werden kann.

**4.** Verfahren nach einem der vorhergehenden Ansprüche, wobei der Startschwellwert sich von dem Stopp-schwellwert unterscheidet, wobei der Startschwell-wert insbesondere höher als der Stoppschwellwert ist.

**5.** Nachahmungslernverfahren, das die folgenden Schritte aufweist:

   - Segmentieren eines visuell abgetasteten Datenstroms mit einem Verfahren, das die Schritte eines der vorhergehenden Ansprüche aufweist, und
   - Nachahmen der Bewegung des Handhabungsmittels des Lehrers eines Zeitsegments.

**6.** Roboter, der mit visuellen Abtasteinrichtungen und einer Recheneinheit versehen ist, wobei die Recheneinheit konzipiert ist, um ein Verfahren nach einem der vorhergehenden Ansprüche auszuführen.

**7.** Videosignalverarbeitungssystem, das eine Recheneinheit hat, die konzipiert oder programmiert ist, um ein Verfahren nach einem der Ansprüche 1 bis 4 auszuführen.

**Revendications**

**1.** Procédé de segmentation d'un flux de données détecté en segments de temps, le procédé comprenant les étapes consistant à :

   - détecter visuellement un enseignant humain ou non humain manipulant un objet,
   - calculer une valeur de correspondance représentant la correspondance entre des positions et/ou mouvements ou leurs dérivées d'au moins deux des éléments suivants :

      i) les moyens de manipulation de l'enseignant,
      ii) la tête de l'enseignant et
      iii) l'objet, et

   - démarrer un segment de temps du flux d'entrée lorsque la valeur de correspondance dépasse une valeur seuil de départ prédéfinie et terminer le segment de temps lorsque la valeur de correspondance chute en dessous d'une valeur seuil d'arrêt prédéfinie.

**2.** Procédé selon la revendication 1, dans lequel la valeur de correspondance représente la correspondance d'une ou plusieurs des caractéristiques visuellement détectées suivantes :

   - la relation des positions des moyens de manipulation de l'enseignant et d'un objet,
   - la relation des orientations des moyens de manipulation de l'enseignant et d'un objet,
   - la différence de vitesse angulaire ou linéaire commune entre les moyens de manipulation de l'enseignant et un objet,
   - la différence d'accélération angulaire ou linéaire commune entre les moyens de manipulation de l'enseignant et un objet,
   - la relation de la direction du regard de l'enseignant et de la position de l'objet,
- la relation de la position des moyens de manipulation de l'enseignant et de la direction du regard de l'enseignant,
- la relation de l'orientation de la tête de l'enseignant et de l'orientation de l'objet,
- la relation du mouvement des moyens de manipulation de l'enseignant et de la position/l'orientation de l'objet.

3. Procédé selon la revendication 1 ou 2, dans lequel les positions et/ou mouvements ou leurs dérivés d'au moins deux éléments sont combinés de manière pondérée afin de calculer la valeur de correspondance, où le poids de chaque élément peut être modifié de façon adaptative pendant une segmentation en cours d'un flux d'entrée.

4. Procédé selon l'une quelconque des revendications précédentes, dans lequel la valeur seuil de départ est différente de la valeur seuil d'arrêt, notamment la valeur seuil de départ est plus élevée que la valeur seuil d'arrêt.

5. Procédé d'enseignement par imitation, comprenant les étapes consistant à :

   - segmenter un flux de données détecté visuellement avec un procédé comportant les étapes selon l'une quelconque des revendications précédentes, et
   - imiter le mouvement des moyens de manipulation de l'enseignant d'un segment de temps.

6. Robot, qui est pourvu de moyens de détection visuelle et d'une unité de calcul, l'unité de calcul étant conçue pour exécuter un procédé selon l'une quelconque des revendications précédentes.

7. Système de traitement de signal vidéo, comportant une unité de calcul conçue ou programmée pour réaliser un procédé selon l'une quelconque des revendications 1 à 4.

Figure 1

Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **Pardowitz, Michael ; Haschke Robert ; Steil Jochen J. ; Ritter Helge J.** Gestalt-Based Action Segmentation for Robot Task Learning. *IEEE-RAS 7th International Conference on Humanoid Robots (HUMANOIDS),* 2008
- **Calinon ; Sylvain.** Continuous Extraction of Task Constraints in a Robot Programming by Demonstration Framework. *PhD thesis,* 2007
- **Yasuo Kuniyoshi ; Masayuki Inaba ; Hirochika Inoue.** Learning by Watching: Extracting Reusable Task Knowledge from Visual Observation of Human Performance. *IEEE Transactions on Robotics and Automation,* 1994
- **Lars Schillingmann ; Britta Wrede ; Katharina Rohlfing.** Towards a Computational Model of Acoustic Packaging. *IEEE 8th International Conference on Development and Learning,* 2009
- **Sing Bing Kang ; Ikeuchi, K.** Determination of motion breakpoints in a task sequence from human hand motion. *IEEE International Conference on Robotics and Automation,* 1994
- **Itoh, M. ; Ozeki, M. ; Nakamura, Y. ; Ohta, Y.** Simple and robust tracking of hands and objects for video-based multimedia production. *IEEE International Conference on Multisensor Fusion and Integration for Intelligent Systems, MFI,* 2003
- **Winfried Ilg ; Gökhan H. Bakir ; Johannes Mezger ; Martin A. Giese.** On the Representation, Learning and Transfer of Spatio-Temporal Movement Characteristics. *International Journal of Humanoid Robotics,* 2004, vol. 1 (4), 613-636
- **Nagai ; Yukie.** From Bottom-Up Visual Attention to Robot Action Learning. *IEEE 8th International Conference on Development and Learning (ICDL),* 2009
- **M. Mühlig ; M. Gienger ; S. Hellbach ; J. Steil ; Ch. Goerick.** Task level imitation using variance-based movement optimization. *Int. Conf. on Robotics and Automation (ICRA), Kobe,* 2009
- **T. B. Moeslund ; A. Hilton ; V. Krüger.** A survey of advances in vision-based human motion capture and analysis. *Computer Vision and Image Understanding,* 2006, vol. 104, 90-126